# EUROPÄISCHE PATENTSCHRIFT

(11) **EP 4 002 798 B1**
(45) Veröffentlichungstag und Bekanntmachung des Hinweises auf die Patenterteilung: **08.01.2025**
(21) Anmeldenummer: 20207960.4
(22) Anmeldetag: 17.11.2020
(51) Int. Cl.: H04L 67/141, H04L 67/12, H04L 9/40, H04L 67/62, H04L 67/562

(54) **VERFAHREN ZUM HERSTELLEN EINER DATENVERBINDUNG ZU EINEM WINDPARK SOWIE WINDPARKKOMMUNIKATIONSSYSTEM**
METHOD FOR ESTABLISHING A DATA CONNECTION TO A WIND FARM AND A WIND FARM COMMUNICATION SYSTEM
PROCÉDÉ D'ÉTABLISSEMENT D'UNE LIAISON DE DONNÉES AVEC UNE ÉOLIENNE AINSI QUE SYSTÈME DE COMMUNICATION DE PARC ÉOLIEN

(43) Veröffentlichungstag der Anmeldung: 25.05.2022
(73) Patentinhaber: Wobben Properties GmbH, 26607 Aurich (DE)
(72) Erfinder: Jakobs, Thorsten, 26532 Großheide (DE); Behrends, Christoph, 26639 Wiesmoor (DE); Betten, Sascha, 26624 Südbrookmerland (DE)
(74) Vertreter: Eisenführ Speiser

(56) Entgegenhaltungen:
- DE-A1- 102011 109 678
- DE-A1- 102017 127 389
- DE-A1- 102018 007 651
- US-A1- 2005 238 034
- US-A1- 2018 287 886

## Beschreibung

Die Erfindung betrifft den Bereich einer Kommunikation zwischen einem Windpark und einem Teilnehmer außerhalb des Windparks über eine Datenverbindung. Derartige Datenverbindungen auf einen Windpark sind häufig für Fernwartungszugriffe auf Komponenten des Windparks nötig. Eine übliche Vorgehensweise für einen derartigen Fernwartungszugriff auf eine Komponente im Windpark erfolgt daher indem eine Netzwerkverbindung oder Datenverbindung von außen in den Windpark von einem Teilnehmer ausgehend aufgebaut wird, um so die zu wartende Komponente zu kontaktieren.

Hierzu weisen Windparks häufig Kommunikationseinheiten auf, die mit einem externen Netzwerk verbunden sind und Ports für die Teilnehmer bereitstellen. Teilnehmer des Netzwerks können dann auf diese Ports zugreifen und eine Verbindung mit der Kommunikationseinheit herstellen. Die Kommunikationseinheit verbindet dann einzelne Komponenten über ein internes Netzwerk mit dem Teilnehmer.

Jede Komponente muss demnach aus Sicht des Netzwerks von außen erreichbar sein.

Häufig erfolgt dies durch eine Netzwerkadressenübersetzung, kurz NAT. Eine NAT entspricht einer Übersetzung von öffentlichen IP-Adressen zu internen IP-Adressen. Jedenfalls müssen die Komponenten entsprechend konfiguriert werden, um auf die Komponenten von außerhalb Zugriff zu bekommen. Eine weitere Alternative ist der Abgleich von internen und öffentlichen IP-Adressen, so dass allen internen Komponenten jeweils eine öffentliche IP-Adresse zugewiesen wird. Diese Lösungen sind daher nur mit hohem Konfigurationsaufwand möglich.

Ein weiteres Problem besteht darin, dass bei beiden genannten Lösungen jede Komponente über ein externes Netzwerk erreichbar ist und weitere Maßnahmen getroffen werden müssen, um zumindest ein Mindestmaß an Sicherheit, nämlich einer IT-Sicherheit oder Informationssicherheit, zu gewährleisten. Dies erfolgt durch den Einsatz von Sicherungssystemen, wie Firewalls und dergleichen.

Die Einrichtung von Firewalls oder anderen Sicherheitsmaßnahmen ist solange gut handhabbar, solange nur ein einzelnes Unternehmen oder ein einzelner Teilnehmer eine Fernwartung einzelner Komponenten durchführt. Da jedoch heute ein Windenergieanlagenhersteller in der Regel bei der Komplexität der unterschiedlichen in einem Windpark verbauten Komponenten nicht mehr alle Komponenten selbst herstellen und entsprechend warten kann, werden vermehrt Komponenten im Windpark oder innerhalb einer Windenergieanlage von Drittherstellern verwendet. Ein Zugriff auf diese Komponenten, beispielsweise zur Fernwartung, erfolgt demnach regelmäßig von den Drittherstellern selbst. Eine qualifizierte Unterstützung, beispielsweise im Fehlerfall, oder die Veränderung der Konfiguration ist häufig vollumfänglich und in geeigneter Zeit nur durch den Dritthersteller selbst möglich. Das Bereitstellen eines Zugriffs oder einer Datenverbindung für eine Vielzahl von unterschiedlichen Teilnehmern steigert somit die Komplexität der Anforderungen an eine Datenverbindung, beispielsweise zur Fernwartung, stark. Ein Aufwand bei der Realisierung geht daher entweder zu Lasten der Sicherheit oder steigert die Kosten der Inbetriebnahme und auch die Betriebskosten selbst.

Das Dokument DE 10 2011 109 678 A1 betrifft ein Kommunikationssystem, das eine sichere Datenverbindung zwischen einem Mobilgerät und einer Rechnereinrichtung für ein Hausautomationssystem aufbaut, um mit dem Mobilgerät Daten, wie beispielsweise Videos, von der Rechnereinheit abrufen zu können. Zum Herstellen der Verbindung umfasst das Kommunikationssystem zusätzlich eine Servereinrichtung, die eine Anfrage für einen Zugriff vom Mobiltelefon an die Rechnereinheit sendet, wobei die Rechnereinheit die Verbindung mit dem Mobiltelefon in Abhängigkeit von der Anfrage aufbaut.

Das Dokument US 2005/0238034 A1 beschreibt in ähnlicher Weise das Herstellen einer sicheren Kommunikationsverbindung zwischen einem Server und einem Client unter Verwendung eines so genannten "session control servers" (SCS).

Aufgabe der vorliegenden Erfindung ist es daher den Missständen des Standes der Technik zu begegnen. Insbesondere soll eine Datenverbindung mit einem Windpark, insbesondere zur Fernwartung, herstellbar sein, die es unterschiedlichen Teilnehmern eines mit dem Windpark verbindbaren Datennetzwerkes ermöglicht, eine Datenverbindung herzustellen, die ein gefordertes Maß an Sicherheit gewährleistet. Es soll eine Alternative zum Stand der Technik gefunden werden.

Hierzu wird ein Verfahren gemäß der Erfindung nach Anspruch 1 vorgeschlagen.

Das Verfahren dient zum Herstellen einer Datenverbindung zwischen einer Kommunikationseinheit eines Windparks und einem Teilnehmer über ein externes Datennetzwerk. Das

Datennetzwerk wird als extern bezeichnet, da es zumindest teilweise außerhalb des Windparks liegt, und so dient, um eine Kommunikation mit dem Windpark von Teilnehmern, die außerhalb des Windparks liegen, zu ermöglichen. Demnach ist also ein Windpark vorgesehen, der eine Kommunikationseinheit umfasst. Weiter sind Teilnehmer außerhalb des Windparks vorgesehen. Der Teilnehmer und die Kommunikationseinheit können über das externe Datennetzwerk eine Datenverbindung herstellen. Hierbei bezeichnet das Datennetzwerk vorzugsweise ein physikalisches Netzwerk, das beispielsweise durch Kabel, insbesondere Kupferkabel, Glasfaserleitungen oder drahtlos, wie beispielsweise Funk, oder Kombinationen davon, ausgebildet ist. Die Datenverbindung beschreibt dann den Zustand des Datennetzwerkes, wenn dieses so konfiguriert oder eingerichtet ist, dass Daten zwischen der Kommunikationseinheit und dem Teilnehmer ausgetauscht werden können.

Das Verfahren umfasst hierbei zunächst das Aufbauen einer Datenverbindung zwischen der Kommunikationseinheit und einem vordefinierten Server über das externe Datennetzwerk durch die Kommunikationseinheit. Die Kommunikationseinheit initiiert also einen Aufbau einer Datenverbindung, um so eine Datenverbindung zwischen der Kommunikationseinheit und einem vordefinierten Server über das externe Datennetzwerk herzustellen. Der vordefinierte Server beschreibt hierbei einen Server, der beispielsweise in der Kommunikationseinheit vordefiniert ist. Das Vordefinieren erfolgt beispielsweise, in dem eine feste IP-Adresse in der Kommunikationseinheit hinterlegt wird, die dem Server zugeordnet ist.

Ferner wird in einem weiteren Schritt eine Zugriffsplanungsanfrage von dem vordefinierten Server durch die Kommunikationseinheit empfangen. Die Zugriffsplanungsanfrage wird hierbei durch die Kommunikationseinheit über das externe Datennetzwerk empfangen. Die Zugriffsplanungsanfrage umfasst eine Identifikation eines Teilnehmers des externen Datennetzwerkes. Das heißt, die Zugriffsplanungsanfrage enthält vorzugsweise Daten, mit denen ein Teilnehmer, der mit dem externen Datennetzwerk verbunden oder verbindbar ist, identifizierbar ist. Auch hier können derartige Daten beispielsweise IP-Adressen oder dergleichen umfassen.

In einem weiteren Schritt wird eine Datenverbindung durch die Kommunikationseinheit aufgebaut. Diese Datenverbindung wird zwischen der Kommunikationseinheit und dem identifizierten Teilnehmer aufgebaut. Das heißt, durch die Zugriffsplanungsanfrage wird der Kommunikationseinheit ein Teilnehmer durch die Identifikation vorgegeben, mit dem dann in einem darauffolgenden Schritt eine Datenverbindung hergestellt wird. Diese Datenverbindung wird, vorzugsweise automatisch, durch die Kommunikationseinheit aufgebaut. Ferner ist diese Datenverbindung eine Datenverbindung über das externe Datennetzwerk.

Ferner werden Anfragen für einen Aufbau einer Datenverbindung, die vom externen Datennetzwerk durch die Kommunikationseinheit empfangen werden, verworfen oder abgewiesen, also ignoriert. Die Kommunikationseinheit verwirft oder weist also jede empfangene Anfrage für einen Aufbau einer Datenverbindung, die sie empfängt, ab. Alternativ ist die Kommunikationseinheit für Teilnehmer des externen Datennetzwerks für Anfragen für einen Aufbau einer Datenverbindung nicht sichtbar. Demnach stellt die Kommunikationseinheit vorzugsweise keine Ports bereit, um eine Datenverbindung mit der Kommunikationseinheit herzustellen.

Demnach wird eine Kommunikationseinheit vorgeschlagen, die in einem Windpark angeordnet ist und eine Möglichkeit zum Datenaustausch mit dem Windpark von außerhalb des Windparks, insbesondere für Fernwartungszugriffe, bereitstellt. Diese Kommunikationseinheit ist jedoch für andere Teilnehmer des externen Datennetzwerks entweder unsichtbar oder reagiert nicht auf Anfragen für einen Aufbau einer Datenverbindung. Insofern ist von einem Teilnehmer des externen Datennetzwerks keine Datenverbindung mit der Kommunikationseinheit initiierbar. Dennoch baut die Kommunikationseinheit von sich aus eine Datenverbindung mit einem vordefinierten Server, der beispielsweise auch ein Teilnehmer des externen Datennetzwerks ist, auf und erhält von diesem Zugriffsplanungsanfragen. Diese Zugriffsplanungsanfragen umfassen Daten, mit denen ein Teilnehmer, der nicht der Server ist, identifizierbar ist, der beispielsweise also einen Fernwartungszugriff benötigt. Daraufhin wird von der Kommunikationseinheit ausgehend eine Datenverbindung mit dem identifizierten Teilnehmer aufgebaut oder initiiert.

Hierdurch wird eine besondere Sicherheit geschaffen, da nämlich nicht mehr jeder beliebige Teilnehmer des externen Datennetzwerks Zugriff durch Aufbau einer Datenverbindung auf den Windpark erhalten kann. Vielmehr muss ein Teilnehmer zunächst durch den Server angekündigt werden. Ein Aufbau von Datenverbindungen ist nur aus Initiative der Kommunikationseinheit möglich. Der Server stellt somit eine Art Filter dar, mit dem unberechtigte Teilnehmer von vornherein ausgeschlossen werden können, auch wenn diesem beispielsweise Zugangsdaten, wie Passwörter, für die Kommunikationseinheit zugänglich sind. Ein Teilnehmer, der also Zugriff auf einen Windpark wünscht, muss immer den Weg über den vordefinierten Server gehen und die Gefahr so genannter Hackerangriffe ist daher stark reduziert. Ferner ist eine Kommunikationseinheit geschaffen, die im Windpark angeordnet ist und so auch den Zugriff innerhalb des Windparks koordinieren kann, so dass eine Übersetzung der Netzwerkadressen nicht mehr nötig ist.

Gemäß einer ersten Ausführungsform wird die Datenverbindung von der Kommunikationseinheit zwischen der Kommunikationseinheit und dem vordefinierten Server über das externe Datennetzwerk durch die Kommunikationseinheit ständig aufrechterhalten. Im Falle eines Abbruchs baut die Kommunikationseinheit die Datenverbindung zwischen der Kommunikationseinheit und dem vordefinierten Server automatisch neu auf.

Die Datenverbindung zwischen der Kommunikationseinheit und dem vordefinierten Server über das externe Datennetzwerk besteht daher im Wesentlichen zu jeder Zeit, so dass der Kommunikationseinheit vom vordefinierten Server im Wesentlichen zu jeder Zeit Zugriffsplanungsanfragen übermittelt werden können, falls beispielsweise ein kurzfristiger Zugriff auf den Windpark durch einen Teilnehmer des externen Netzwerks gewünscht oder nötig ist. Insofern kann die Kommunikationseinheit sofort über derartige Zugriffsplanungsanfragen informiert werden und im Grunde augenblicklich eine Datenverbindung zu einem über die Zugriffsplanungsanfrage identifizierten Teilnehmer aufbauen. Ein besonders kurzfristiger Zugriff auf den Windpark ist so möglich.

Gemäß einer weiteren Ausführungsform wird die Datenverbindung zwischen der Kommunikationseinheit und dem vordefinierten Server über das externe Datennetzwerk durch die Kommunikationseinheit zu vorgegebenen Zeitpunkten, in vorgegebenen Intervallen oder durch Aufforderung, beispielsweise durch einen Servicemitarbeiter vor Ort an der Kommunikationseinheit selbst, aufgebaut. In diesem Fall werden vorzugsweise nach dem Aufbau neue Zugriffsplanungsanfragen empfangen und nach dem Empfang besonders bevorzugt die Datenverbindung wieder unterbrochen.

Bei dieser Ausführungsform wird in Kauf genommen, dass die Datenverbindung zwischen der Kommunikationseinheit und dem vordefinierten Server nicht ständig aufrechterhalten werden muss. Zwar ist so ein kurzfristiger Zugriff eines Teilnehmers auf den Windpark nicht mehr möglich ist. Demgegenüber wird aber die Sicherheit des Systems weiter erhöht, da eine bestehende Datenverbindung zwischen der Kommunikationseinheit und dem vordefinierten Server, die möglicherweise angreifbar wäre, nur noch für kurze Zeiträume aufgebaut würde.

Gemäß der Erfindung umfasst die Zugriffsplanungsanfrage ein Zeitfenster. Das Zeitfenster ist beispielsweise durch einen Startzeitpunkt und eine Dauer oder durch einen Startzeitpunkt und ein Endzeitpunkt definiert. Die Zeitpunkte umfassen beispielsweise ein Datum und eine Uhrzeit und die Dauer eine Angabe in Sekunden, Minuten und/oder Stunden. Die Kommunikationseinheit stellt dann in Abhängigkeit dieses Zeitfenstern eine Datenverbindung mit dem durch die Zugriffsplanungsangabe identifizierten Teilnehmer zu Beginn des Zeitfensters her. Ferner unterbricht die Kommunikationseinheit die Datenverbindung automatisch nach der vorgegebenen Dauer oder zu dem Endzeitpunkt.

Eine genaue Planung eines Zugriffs auf den Windpark ist somit möglich. Ein Bediener des identifizierten Teilnehmers, der beispielsweise ein Servicemitarbeiter eines Drittanbieters ist, kann somit zu einem vordefinierten, insbesondere durch ihn selbst vorgegebenen Zeitpunkt, darauf warten, dass die Kommunikationseinheit eine Datenverbindung mit dem Teilnehmer aufbaut. Für die vorgegebene Dauer oder bis zum Endzeitpunkt hat der Bediener dann die Möglichkeit über den Teilnehmer auf den Windpark mit der Kommunikationseinheit zuzugreifen.

Gemäß einer weiteren Ausführungsform ist die Kommunikationseinheit über ein internes Datennetzwerk mit mehreren Komponenten des Windparks verbunden. Die Kommunikationseinheit dient somit insbesondere auch als Gateway. Die Zugriffsplanungsanfrage umfasst eine Angabe über mindestens eine der Komponenten im Windpark. Ferner stellt die Kommunikationseinheit eine Datenverbindung über das Datennetzwerk mit der in der Zugriffsplanungsanfrage angegebenen Komponente her.

Die Kommunikationseinheit dient somit vorzugsweise auch als Gateway, um den identifizierten Teilnehmer mit der angegebenen vordefinierten Komponente einer Zugriffsplanungsanfrage über zwei Datenverbindungen, nämlich einerseits über das externe Datennetzwerk und andererseits über das interne Datennetzwerk, miteinander zu verbinden. Ein Zugriff auf die Komponente im Windpark für einen Fernzugriff durch einen Teilnehmer des externen Datennetzwerkes ist somit ohne aufwendige Konfiguration möglich, da beispielsweise auf eine Netzwerkadressenübersetzung verzichtet werden kann.

Besonders bevorzugt werden Daten vom identifizierten Teilnehmer an eine Komponente des Windparks und/oder von der Komponente an den identifizierten Teilnehmer mittels der Kommunikationseinheit übertragen.

Gemäß einer weiteren Ausführungsform ist der identifizierte Teilnehmer ein Rechner mit einer eindeutigen Netzwerkadresse im externen Datennetzwerk, insbesondere einer IP-Adresse. Die Zugriffsplanungsanfrage umfasst die Netzwerkadresse des Teilnehmers und insbesondere Anmeldedaten für den Teilnehmer. Mit der Zugriffsplanungsanfrage enthält die Kommunikationseinheit somit eindeutige Informationen, um eine Datenverbindung mit dem identifizierten Teilnehmer aufzubauen.

Gemäß einer weiteren Ausführungsform ist der Server ein Rechner oder mit einem Rechner verbunden, um Zugriffsplanungsanfragen einzugeben oder von einem Teilnehmer zu empfangen. Das Eingeben der Zugriffsplanungsanfragen erfolgt vorzugsweise über eine weitere Datenverbindung, wie beispielsweise eine Internetverbindung mit dem Rechner, wobei der Rechner die Zugriffsplanungsanfrage an den Server übergibt. Der Server kann vorzugsweise als Broker bezeichnet werden. Besonders bevorzugt ist eine Eingabemaske im Rechner bereitgestellt, die von einem externen Teilnehmer ausgefüllt werden kann. Die Maske enthält beispielsweise eine Abfrage über einen zu identifizierenden Teilnehmer, insbesondere in Form einer IP-Adresse, Anmeldedaten, die vorzugsweise einen Benutzernamen und ein Passwort oder ein Zertifikat umfassen, ein Zeitfenster, in dem die Datenverbindung hergestellt werden soll und/oder eine Komponente eines Windparks, auf die zugegriffen werden soll.

Eine einfache Möglichkeit um Zugriffsplanungsanfragen zu erstellen ist somit gegeben.

Gemäß einer Ausführungsform wird die Zugriffsplanungsanfrage vor der Weitergabe an den Server automatisch oder manuell freigegeben oder die Zugriffsplanungsanfrage wird verworfen. Dies erfolgt vorzugsweise nach einer Sicherheitsprüfung. Hierdurch ist ein weiterer Sicherheitsaspekt geschaffen, gemäß dem eine eingegebene Zugriffsplanungsanfrage von einem Teilnehmer, der beispielsweise einen Fernwartungszugriff wünscht, entweder anhand vorgegebener Kriterien automatisch geprüft wird oder gemäß dem ein Servicemitarbeiter die Zugriffsplanungsanfrage überprüft und diese dann manuell freigegeben werden muss. Eine weitere Sicherung, um unberechtigte Zugriffe auf einen Windpark zu erlangen ist somit geschaffen.

Gemäß einer weiteren Ausführungsform wird die vom Server empfangene Zugriffsplanungsanfrage geprüft, bevor die Zugriffsplanungsanfrage für einen Abruf durch eine Kommunikationseinheit bereitgestellt wird. Eine Plausibilitätsprüfung einer Zugriffsplanungsanfrage im Server kann somit erfolgen. So kann sichergestellt werden, dass keine Zugriffsplanungsanfragen an die Kommunikationseinheit übergeben werden, die falsche Anmeldedaten oder dergleichen enthalten oder die einen Zugriff in Zeitfenstern wünschen, zu denen bereits eine maximale Anzahl an Datenverbindungen geplant ist.

Ferner umfasst die Erfindung ein System mit einer Kommunikationseinheit zum Herstellen einer Datenverbindung zwischen der Kommunikationseinheit und einem Teilnehmer über ein zum Windpark externes Datennetzwerk. Das System ist eingerichtet mit der Kommunikationseinheit eine Datenverbindung zwischen der Kommunikationseinheit und einem vordefinierten Server über das externe Datennetzwerk aufzubauen. Ferner ist die Kommunikationseinheit eingerichtet mindestens eine Zugriffsplanungsanfrage von dem vordefinierten Server über das externe Datennetzwerk zu empfangen. Die Zugriffsplanungsanfrage umfasst Daten, die eine Identifikation eines Teilnehmers des externen Datennetzwerkes identifizieren.

Zudem ist die Kommunikationseinheit des Systems eingerichtet eine Datenverbindung zwischen der Kommunikationseinheit und dem identifizierten Teilnehmer, der durch die Zugriffsplanungsanfrage identifiziert ist, aufzubauen. Die Kommunikationseinheit ist ferner eingerichtet von dem externen Datennetzwerk empfangene Anfragen für einen Aufbau einer Datenverbindung zu verwerfen oder abzuweisen. Alternativ ist die Kommunikationseinheit so konfiguriert, dass diese für Anfragen für einen Aufbau einer Datenverbindung im externen Netzwerk nicht sichtbar, also unsichtbar, ist.

Die Kommunikationseinheit kann somit vorzugsweise als A-Teilnehmer und die übrigen Teilnehmer des externen Datennetzwerks als B-Teilnehmer bezeichnet werden. Das heißt, die Kommunikationseinheit ist immer die Einheit, die eine Verbindung einleitet, wohingegen ein identifizierter Teilnehmer immer der Teilnehmer ist, der vom A-Teilnehmer zum Einleiten der Verbindung an- oder ausgewählt wurde. Die Kommunikationseinheit ist so ausgebildet, dass diese nie als B-Teilnehmer fungieren kann.

Ferner ist die Kommunikationseinheit gemäß einer Ausführungsform derart konfiguriert, dass diese eine Datenverbindung mit dem vordefinierten Server ständig aufrechterhält und im Falle eines Abbruchs automatisch neu aufbaut.

Gemäß einer weiteren Ausführungsform ist die Kommunikationseinheit eingerichtet oder konfiguriert, eine Datenverbindung zwischen der Kommunikationseinheit und dem vordefinierten Server über das externe Datennetzwerk zu vorgegebenen Zeitpunkten, in vorgegebenen Intervallen oder durch Aufforderung auszuführen, wobei insbesondere neue Zugriffsplanungsanfragen nach dem Aufbau der Datenverbindung empfangen und besonders bevorzugt die Datenverbindung nach dem Empfangen wieder unterbrochen wird.

Gemäß einer weiteren Ausführungsform umfasst das System mindestens eine Komponente des Windparks und die Kommunikationseinheit ist über ein internes Datennetzwerk mit der Komponente verbunden. Vorzugsweise ist die Kommunikationseinheit eingerichtet oder konfiguriert, Daten zwischen der Komponente und einem identifizierten Teilnehmer zu übertragen.

Gemäß einer weiteren Ausführungsform umfasst das System den vordefinierten Server und vorzugsweise einen Rechner, wobei der Rechner eingerichtet ist, Zugriffsplanungsanfragen entgegenzunehmen und, insbesondere nach einer automatischen oder manuellen Sicherheitsprüfung, an den Server zum Abruf durch die Kommunikationseinheit bereitzustellen.

Gemäß einer weiteren Ausführungsform umfasst das System den Server und mehrere Kommunikationseinheiten, die jeweils einem von mehreren Windparks zugeordnet sind.

Außerdem betrifft die Erfindung einen Server zum Bereitstellen von Zugriffsplanungsanfragen, die insbesondere jeweils Daten umfassen, um einen Teilnehmer eines externen Netzwerks zu identifizieren, eine Komponente eines Windparks beschreiben und ein Zeitfenster angeben, in dem eine Datenverbindung zwischen dem Teilnehmer und der Komponente erfolgen soll.

Zudem umfasst die Erfindung einen Windpark mit einer Ausführungsform des vorgenannten Systems.

Weitere Ausführungsformen ergeben sich anhand der in den Figuren näher erläuterten Ausführungsbeispiele. Hierbei zeigen:
- Figur 1: eine Windenergieanlage,
- Figur 2: einen Windpark,
- Figur 3: ein Ausführungsbeispiel des Systems und
- Figur 4: ein Ausführungsbeispiel der Schritte des Verfahrens.

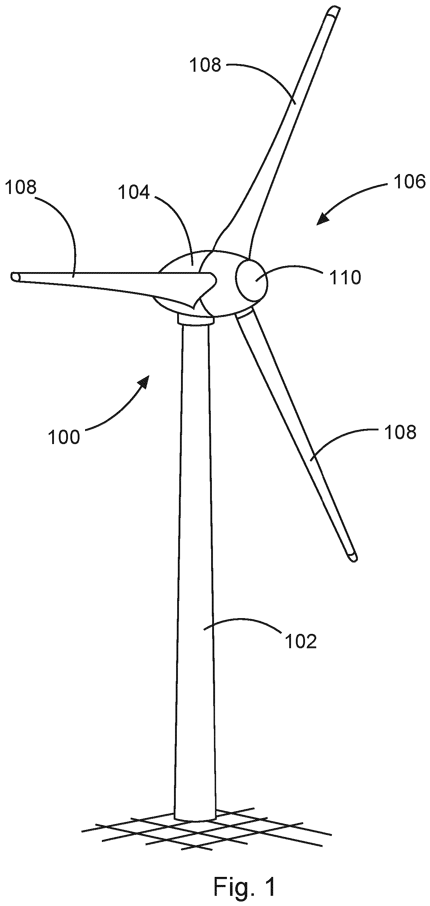

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

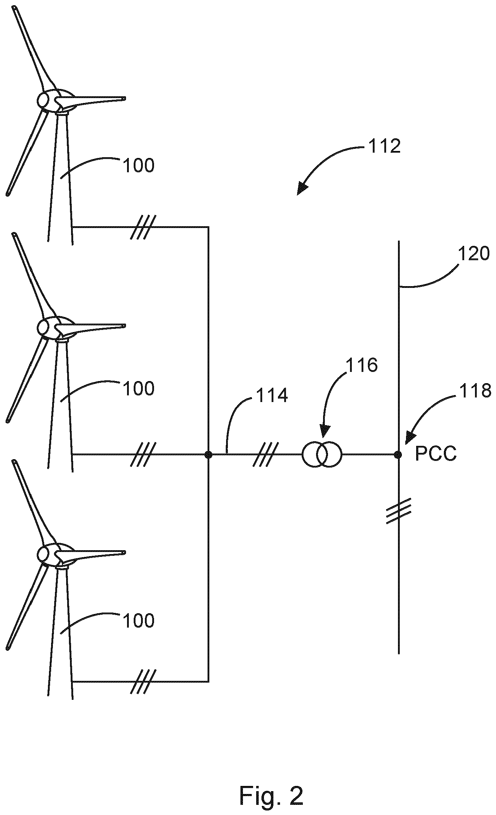

Die Windenergieanlage 100 aus Figur 1 kann auch im Zusammenschluss mit mehreren Windenergieanlagen 100 in einem Windpark, wie er im Folgenden in Bezug auf Figur 2 beschrieben wird, betrieben werden.

In Figur 2 ist ein Windpark 112 mit exemplarisch drei Windenergieanlagen 100 dargestellt. Die Windenergieanlagen 100 können gleich oder verschieden sein. Die Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Figur 2 ist nur eine vereinfachte Darstellung eines Windparks 112, die beispielsweise keine Leistungssteuerung zeigt, obwohl natürlich eine Leistungssteuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

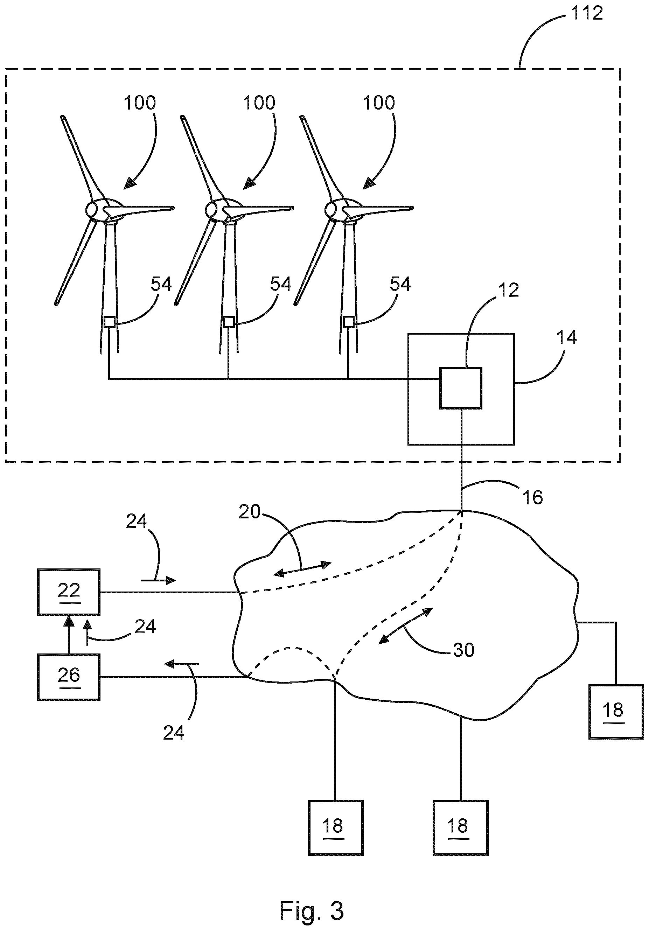

Figur 3 zeigt ein System gemäß einem Ausführungsbeispiel der Erfindung. Das System umfasst einen Windpark 112 mit exemplarisch dargestellten drei Windenergieanlagen 100. Jede der Windenergieanlagen ist über ein internes Datennetzwerk 10 mit einer Kommunikationseinheit 12 verbunden. Die Kommunikationseinheit 12 ist beispielsweise Bestandteil eines SCADA-Systems 14 des Windparks 112. Die Kommunikationseinheit 12 ist über ein externes Datennetzwerk 16 mit einer Vielzahl von Teilnehmern 18 verbindbar. Eine Datenverbindung 20, die von der Kommunikationseinheit 12 aufgebaut wurde, besteht mit einem vordefinierten Server 22.

Der vordefinierte Server 22 kann über diese Datenverbindung 20 Zugriffsplanungsanfragen 24 an die Kommunikationseinheit 12 übertragen. Die Zugriffsplanungsanfragen 24 werden zuvor über das externe Datennetzwerk 16 von einem Teilnehmer 18 an einen Rechner 26 übertragen. Nach einer Sicherheitsprüfung überträgt der Rechner 26 die Zugriffsplanungsanfrage 24 an den vordefinierten Server 22, der die Zugriffsplanungsanfrage 24 dann an die Kommunikationseinheit 12 überträgt. Der Teilnehmer 18, der sich mit der Zugriffsplanungsanfrage 24 identifiziert, wird dann mit der Kommunikationseinheit 12 durch Aufbauen einer Datenverbindung 30 durch die Kommunikationseinheit 12 verbunden. So kann der vordefinierte Teilnehmer 18 Daten mit der Kommunikationseinheit 12 austauschen. Über das externe Datennetzwerk 16, das beispielsweise dem Internet entspricht, ist ein Aufbau einer Datenverbindung 30 ausgehend von einem der Teilnehmer 18 mit der Kommunikationseinheit 12 nicht möglich. Die Kommunikationseinheit 12 ermöglicht dem Teilnehmer 18 über die Datenverbindung 30 einen Zugriff auf eine Komponente 54 des Windparks 112.

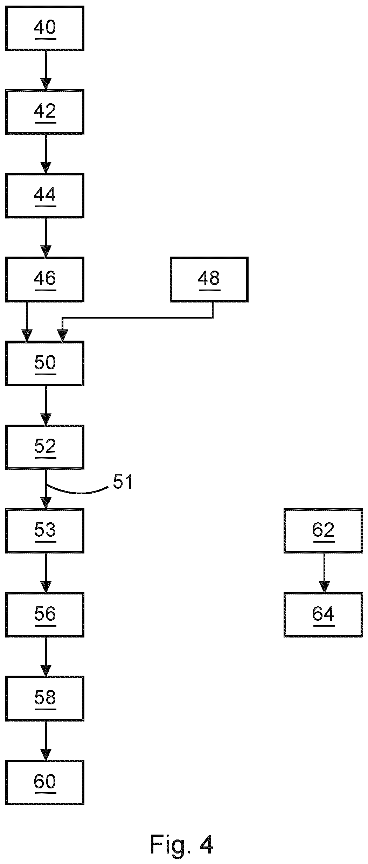

Figur 4 beschreibt ein Ausführungsbeispiel des Verfahrens zum Herstellen der Datenverbindung 30 zwischen der Kommunikationseinheit 12 des Windparks 112 und einem Teilnehmer 18. Im Schritt 40 wird von einem Teilnehmer 18 eine Zugriffsplanungsanfrage 24 an einen Rechner 26 übergeben. Im Schritt 42 wird diese Zugriffsplanungsanfrage 24 durch den Rechner 26 geprüft. Im Schritt 44 wird die geprüfte Zugriffsplanungsanfrage 24 an den Server 22 übertragen. Die Zugriffsplanungsanfrage 24 wird im Server 22 zumindest bis zu einem Abruf durch die Kommunikationseinheit 12 im Schritt 46 gespeichert.

Ferner, beispielsweise parallel, zeitlich vorher oder erst nach Schritt 46 erfolgt im Schritt 48 der Aufbau einer Datenverbindung 20 zwischen der Kommunikationseinheit 12 und dem vordefinierten Server 22. Ist die Verbindung aufgebaut, wird im Schritt 50 die Zugriffsplanungsanfrage 24 an die Kommunikationseinheit 12 übergeben oder von dieser empfangen. Besteht die Datenverbindung 20 zwischen der Kommunikationseinheit 12 und dem vordefinierten Server 22 noch nicht, wird die Zugriffsplanungsanfrage weiter gespeichert.

Nach Übertragen der Zugriffsplanungsanfrage 24 an die Kommunikationseinheit 12 werden in einem Schritt 52 die Daten der Zugriffsplanungsanfrage 24 extrahiert. Die Daten umfassen ein Zeitfenster 51, an dem ein Zugriff auf eine Komponente 54 des Windparks 112 gewünscht wird. In einem Schritt 53 wird dann abgewartet, bis das Zeitfenster 51 eintritt und im Schritt 56 wird dann eine Datenverbindung 30 zwischen einem Teilnehmer 18, der ebenfalls durch die Daten, die in der Zugriffsplanungsanfrage 24 enthalten sind, identifiziert wird und einer Komponente 54, die ebenfalls in der Zugriffsplanungsanfrage 24 genannt ist, hergestellt. Im Schritt 58 erfolgt dann ein Datenaustausch zwischen der Komponente 54 und dem Teilnehmer 18. Nach Ablauf des Zeitfensters 51 wird dann im Schritt 60 die Datenverbindung 30 unterbrochen.

Versucht zu einem beliebigen Zeitpunkt in einem Schritt 62 ein Teilnehmer 18 eine Verbindung mit der Kommunikationseinheit 12 aufzubauen, so wird diese Anfrage über einen Verbindungsaufbau in einem Schritt 64 ignoriert oder abgewiesen.

## Patentansprüche

1. Verfahren zum Herstellen einer Datenverbindung (30) zwischen einer Kommunikationseinheit (12) eines Windparks (112) und einem Teilnehmer (18) über ein zum Windpark (112) externes Datennetzwerk (16), umfassend die Schritte:
- Aufbauen (48) einer Datenverbindung (20) zwischen der Kommunikationseinheit (12) und einem vordefinierten Server (22) über das externe Datennetzwerk (16) durch die Kommunikationseinheit (12),
- Empfangen (50) mindestens einer Zugriffsplanungsanfrage (24) von dem vordefinierten Server (22) über das externe Datennetzwerk (16) durch die Kommunikationseinheit (12), wobei die Zugriffsplanungsanfrage (24) einen Teilnehmer (18) des externen Datennetzwerks (16) identifiziert,
- Aufbauen (54) einer Datenverbindung (30) zwischen der Kommunikationseinheit (12) und dem identifizierten Teilnehmer durch die Kommunikationseinheit (12), wobei von dem externen Datennetzwerk (16) empfangene Anfragen für einen Aufbau einer Datenverbindung (20, 30) durch die Kommunikationseinheit (12) verworfen oder abgewiesen (64) werden oder die Kommunikationseinheit (12) für Teilnehmer (18) des externen Datennetzwerks (16) für Anfragen für einen Aufbau einer Datenverbindung (30) nicht sichtbar ist,
wobei die Zugriffsplanungsanfrage (24) ein Zeitfenster (51) umfasst und die Kommunikationseinheit (12) den Aufbau der Datenverbindung (20) zum Beginn des Zeitfensters (51) ausführt, und die Kommunikationseinheit (12) nach Ablauf einer Dauer oder zum Ende des Zeitfensters (51) die Datenverbindung (20) unterbricht.

2. Verfahren nach Anspruch 1, wobei die Kommunikationseinheit (12) die Datenverbindung (20) zwischen der Kommunikationseinheit (12) und dem vordefinierten Server (22) über das externe Datennetzwerk (16) ständig aufrechterhält und im Falle eines Abbruchs automatisch neu aufbaut (48).

3. Verfahren nach Anspruch 1 oder 2, wobei die Kommunikationseinheit (12) die Datenverbindung (20) zwischen der Kommunikationseinheit (12) und dem vordefinierten Server (22) über das externe Datennetzwerk (16) zu vorgegebenen Zeitpunkten, in vorgegebenen Intervallen oder durch Aufforderung aufbaut, vorzugsweise daraufhin neue Zugriffsplanungsanfragen (24) empfängt und die Datenverbindung (20) besonders bevorzugt daraufhin wieder unterbricht.

4. Verfahren nach einem der vorhergehenden Ansprüche, wobei die Kommunikationseinheit (12) über ein internes Datennetzwerk (10) mit mehreren Komponenten (54) des Windparks (112) verbunden ist und die Zugriffsplanungsanfrage (24) eine Angabe über mindestens eine Komponente (54) im Windpark (112) umfasst, wobei die Kommunikationseinheit (12) eine Datenverbindung über das interne Datennetzwerk (10) mit der angegebenen Komponente (54) herstellt, wobei vorzugsweise Daten vom identifizierten Teilnehmer (18) an die mindestens eine Komponente (54) des Windparks (112) übertragen und/oder von der Komponente (54) an den identifizierten Teilnehmer (18) übertragen werden.

5. Verfahren nach einem der vorhergehenden Ansprüche, wobei der identifizierte Teilnehmer (18) ein Rechner mit einer eindeutigen Netzwerkadresse, insbesondere einer IP-Adresse, ist, und wobei die Zugriffsplanungsanfrage (24) die Netzwerkadresse des Teilnehmers und insbesondere Anmeldedaten für den Teilnehmer umfasst.

6. Verfahren nach einem der vorhergehenden Ansprüche, wobei ein Rechner (26) vorgesehen ist, um Zugriffsplanungsanfragen (24), insbesondere von einem Teilnehmer, zu empfangen, insbesondere über das externe Datennetzwerk 16, und der Rechner (26) die Zugriffsplanungsanfrage (24) an den Server übergibt.

7. Verfahren nach Anspruch 6, wobei die Zugriffsplanungsanfrage (24) vom Rechner (26) an den Server (22) weitergegeben wird, wenn die Zugriffsplanungsanfrage (24) automatisch oder manuell vom oder mit dem Rechner (26), insbesondere nach einer Sicherheitsprüfung, freigegeben wird.

8. Verfahren nach einem der vorhergehenden Ansprüche, wobei im Server (22) eine empfangene Zugriffsplanungsanfrage (24) geprüft wird, bevor die Zugriffsplanungsanfrage (24) für einen Abruf durch die Kommunikationseinheit (12) bereitgestellt wird.

9. System mit einer Kommunikationseinheit (12) eines Windparks (112) zum Herstellen einer Datenverbindung zwischen der Kommunikationseinheit (12) und einem Teilnehmer (18) über ein zum Windpark externes Datennetzwerk (16), wobei die Kommunikationseinheit (12) insbesondere eingerichtet ist, die Schritte des Verfahrens nach einem der Ansprüche 1 bis 8 auszuführen, wobei die Kommunikationseinheit (12) eingerichtet ist,
- eine Datenverbindung (20) zwischen der Kommunikationseinheit (12) und einem vordefinierten Server (22) über das externe Datennetzwerk (16) aufzubauen,
- eine Zugriffsplanungsanfrage (24) von dem vordefinierten Server (22) über das externe Datennetzwerk (16) zu empfangen, wobei die Zugriffsplanungsanfrage (24) einen Teilnehmer (18) des externen Netzwerks (16) identifiziert und ein Zeitfenster (51) umfasst,
- eine Datenverbindung (30) zwischen der Kommunikationseinheit (12) und dem identifizierten Teilnehmer (18) aufzubauen und
- von dem externen Datennetzwerk empfangene Anfragen für einen Aufbau einer Datenverbindung zu verwerfen oder abzuweisen oder für Teilnehmer (18) des externen Datennetzwerks (16) für Anfragen für einen Aufbau einer Datenverbindung unsichtbar zu sein,
wobei das System eingerichtet ist, die Datenverbindung (16) zwischen der Kommunikationseinheit (12) und dem vordefinierten Server (22) über das externe Datennetzwerk (16) zu vorgegebenen Zeitpunkten, in vorgegebenen Intervallen oder durch Aufforderung aufzubauen, vorzugsweise neue Zugriffsplanungsanfragen (24) zu empfangen und besonders bevorzugt die Datenverbindung wieder zu unterbrechen,
wobei die Kommunikationseinheit (12) eingerichtet ist, den Aufbau der Datenverbindung (20) zum Beginn des Zeitfensters (51) auszuführen und nach Ablauf einer Dauer oder zum Ende des Zeitfensters (51) die Datenverbindung (20) zu unterbrechen.

10. System nach Anspruch 9, wobei das System eingerichtet ist, die Datenverbindung (20) zwischen der Kommunikationseinheit (12) und dem vordefinierten Server (22) über das externe Datennetzwerk (16) ständig aufrechtzuerhalten und im Falle eines Abbruchs automatisch neu aufzubauen.

11. System nach Anspruch 9 oder 10, wobei das System ferner eine Komponente (54) des Windparks (112) umfasst und die Kommunikationseinheit (12) über ein internes Datennetzwerk (10) mit der Komponente (54) des Windparks (112) verbunden ist, wobei die Kommunikationseinheit (12) eingerichtet ist, Daten zwischen einem Teilnehmer (18) und der Komponente (54), insbesondere als Gateway ausgebildet, zu übertragen.

12. System nach einem der Ansprüche 9 bis 11, wobei das System ferner den Server (22) und vorzugsweise einen Rechner (26) zum Empfangen der Zugriffsplanungsanfragen (24) umfasst.

13. System nach einem der Ansprüche 9 bis 12, wobei das System einen Server zum Ausführen des Verfahrens nach einem der Ansprüche 1 bis 8 umfasst.

14. Windpark mit einem System nach einem der Ansprüche 9 bis 12, insbesondere umfassend eine Kommunikationseinheit (12).

## Claims

1. Method for establishing a data connection (30) between a communication unit (12) of a wind farm (112) and a subscriber (18) via a data network (16) external to the wind farm (112), comprising the steps of:
- establishing (48) a data connection (20) between the communication unit (12) and a predefined server (22) via the external data network (16) by the communication unit (12),
- receiving (50) at least one access scheduling request (24) from the predefined server (22) via the external data network (16) by the communication unit (12), wherein the access scheduling request (24) identifies a subscriber (18) of the external data network (16),
- establishing (54) a data connection (30) between the communication unit (12) and the identified subscriber by the communication unit (12),
wherein requests received from the external data network (16) for establishing a data connection (20, 30) are discarded or rejected (64) by the communication unit (12) or the communication unit (12) is not visible to subscribers (18) of the external data network (16) for requests for establishing a data connection (30),
wherein the access scheduling request (24) comprises a time window (51) and the communication unit (12) executes the establishment of the data connection (20) at the beginning of the time window (51), and the communication unit (12) interrupts the data connection (20) after a duration has elapsed or at the end of the time window (51).

2. Method according to claim 1, wherein the communication unit (12) constantly maintains the data connection (20) between the communication unit (12) and the predefined server (22) via the external data network (16) and automatically re-establishes it (48) in the event of an interruption.

3. Method according to claim 1 or 2, wherein the communication unit (12) establishes the data connection (20) between the communication unit (12) and the predefined server (22) via the external data network (16) at predetermined times, at predetermined intervals or by request, preferably thereupon receives new access scheduling requests (24) and particularly preferably thereupon interrupts the data connection (20) again.

4. Method according to one of the preceding claims, wherein the communication unit (12) is connected to a plurality of components (54) of the wind farm (112) via an internal data network (10) and the access scheduling request (24) comprises an indication of at least one component (54) in the wind farm (112), wherein the communication unit (12) establishes a data connection via the internal data network (10) with the specified component (54), wherein preferably data is transmitted from the identified subscriber (18) to the at least one component (54) of the wind farm (112) and/or transmitted from the component (54) to the identified subscriber (18).

5. Method according to one of the preceding claims, wherein the identified subscriber (18) is a computer with a unique network address, in particular an IP address, and wherein the access scheduling request (24) comprises the network address of the subscriber and in particular login data for the subscriber.

6. Method according to one of the preceding claims, wherein a computer (26) is provided to receive access scheduling requests (24), in particular from a subscriber, in particular via the external data network (16), and the computer (26) transmits the access scheduling request (24) to the server.

7. Method according to claim 6, wherein the access scheduling request (24) is passed from the computer (26) to the server (22) when the access scheduling request (24) is automatically or manually released by or with the computer (26), in particular after a security check.

8. Method according to one of the preceding claims, wherein a received access scheduling request (24) is checked in the server (22) before the access scheduling request (24) is provided for retrieval by the communication unit (12).

9. System comprising a communication unit (12) of a wind farm (112) for establishing a data connection between the communication unit (12) and a subscriber (18) via a data network (16) external to the wind farm, wherein the communication unit (12) is in particular adapted to perform the steps of the method according to any one of claims 1 to 8, wherein the communication unit (12) is adapted for,
- establishing a data connection (20) between the communication unit (12) and a predefined server (22) via the external data network (16),
- receiving an access scheduling request (24) from the predefined server (22) via the external data network (16), wherein the access scheduling request (24) identifies a subscriber (18) of the external network (16) and comprises a time window (51),
- establishing a data connection (30) between the communication unit (12) and the identified subscriber (18), and
- to reject or refuse requests received from the external data network for establishing a data connection or to be invisible to subscribers (18) of the external data network (16) for requests for establishing a data connection,
wherein the system is adapted for establishing the data connection (16) between the communication unit (12) and the predefined server (22) via the external data network (16) at predetermined times, at predetermined intervals or by request, preferably to receive new access scheduling requests (24) and particularly preferably to interrupt the data connection again,
wherein the communication unit (12) is adapted for establishing the data connection (20) at the start of the time window (51) and to interrupt the data connection (20) after a duration has elapsed or at the end of the time window (51).

10. System according to claim 9, wherein the system is adapted for constantly maintaining the data connection (20) between the communication unit (12) and the predefined server (22) via the external data network (16) and for automatically re-establishing it in the event of an interruption.

11. System according to claim 9 or 10, wherein the system further comprises a component (54) of the wind farm (112) and the communication unit (12) is connected to the component (54) of the wind farm (112) via an internal data network (10), wherein the communication unit (12) is arranged for transmitting data between a subscriber (18) and the component (54), in particular designed as a gateway.

12. System according to any one of claims 9 to 11, wherein the system further comprises the server (22) and preferably a computer (26) for receiving the access scheduling requests (24).

13. System according to any one of claims 9 to 12, wherein the system comprises a server for executing the method according to any one of claims 1 to 8.

14. Wind farm comprising a system according to any one of claims 9 to 12, in particular comprising a communication unit (12).

## Revendications

1. Procédé pour produire une liaison de données (30) entre une unité de communication (12) d'un parc éolien (112) et un abonné (18) par l'intermédiaire d'un réseau de données externe (16) par rapport au parc éolien (112), comprenant les étapes :
- d'établissement (48) d'une liaison de données (20) entre l'unité de communication (12) et un serveur (22) prédéfini, par l'intermédiaire du réseau de données externe (16), par l'unité de communication (12),
- de réception (50) d'au moins une demande de planification d'accès (24) par le serveur (22) prédéfini, par l'intermédiaire du réseau de données externe (16), par l'unité de communication (12), dans lequel la demande de planification d'accès (24) identifie un abonné (18) du réseau de données externe (16),
- d'établissement (54) d'une liaison de données (30) entre l'unité de communication (12) et l'abonné identifié par l'unité de communication (12),
dans lequel les demandes reçues par le réseau de données externe (16), pour un établissement d'une liaison de données (20, 30) par l'unité de communication (12), sont rejetées ou refusées (64) ou l'unité de communication (12) pour l'abonné (18) du réseau de données externe (16) pour des demandes pour un établissement d'une liaison de données (30) n'est pas visible,
dans lequel la demande de planification d'accès (24) comprend une fenêtre temporelle (51) et l'unité de communication (12) met en oeuvre l'établissement de la liaison de données (20) au début de la fenêtre temporelle (51), et l'unité de communication (12) interrompt la liaison de données (20) après expiration d'une durée ou à la fin de la fenêtre temporelle (51).

2. Procédé selon la revendication 1, dans lequel l'unité de communication (12) maintient en permanence la liaison de données (20), entre l'unité de communication (12) et le serveur (22) prédéfini, par l'intermédiaire du réseau de données externe (16) et la rétablit automatiquement dans le cas d'une interruption (48).

3. Procédé selon la revendication 1 ou 2, dans lequel l'unité de communication (12) établit la liaison de données (20), entre l'unité de communication (12) et le serveur (22) prédéfini, par l'intermédiaire du réseau de données externe (16) à des moments prédéfinis, par intervalles prédéfinis ou par invitation, de préférence après cela reçoit de nouvelles demandes de planification d'accès (24) et de manière particulièrement préférée après cela interrompt à nouveau la liaison de données (20).

4. Procédé selon l'une quelconque des revendications précédentes, dans lequel l'unité de communication (12) est reliée à plusieurs composants (54) du parc éolien (112) par l'intermédiaire d'un réseau de données interne (10) et la demande de planification d'accès (24) comprend une indication sur au moins un composant (54) dans le parc éolien (112), dans lequel l'unité de communication (12) établit une liaison de données avec le composant (54) indiqué, par l'intermédiaire du réseau de données interne (10), dans lequel de préférence des données sont transmises par l'abonné (18) identifié à l'au moins un composant (54) du parc éolien (112) et/ou transmises par le composant (54) à l'abonné (18) identifié.

5. Procédé selon l'une quelconque des revendications précédentes, dans lequel l'abonné (18) identifié est un ordinateur avec une adresse réseau unique, en particulier une adresse IP, et dans lequel la demande de planification d'accès (24) comprend l'adresse réseau de l'abonné et en particulier des données d'identification pour l'abonné.

6. Procédé selon l'une quelconque des revendications précédentes, dans lequel un ordinateur (26) est prévu, afin de recevoir des demandes de planification d'accès (24), en particulier d'un abonné, en particulier par l'intermédiaire du réseau de données externe (16), et l'ordinateur (26) remet la demande de planification d'accès (24) au serveur.

7. Procédé selon la revendication 6, dans lequel la demande de planification d'accès (24) est transférée par l'ordinateur (26) au serveur (22), lorsque la demande de planification d'accès (24) est autorisée automatiquement ou manuellement par ou avec l'ordinateur (26), en particulier après un contrôle de sécurité.

8. Procédé selon l'une quelconque des revendications précédentes, dans lequel une demande de planification d'accès (24) reçue est contrôlée dans le serveur (22), avant que la demande de planification d'accès (24) soit fournie pour un appel par l'unité de communication (12).

9. Système avec une unité de communication (12) d'un parc éolien (112) pour établir une liaison de données entre l'unité de communication (12) et un abonné (18) par l'intermédiaire d'un réseau de données externe (16) par rapport au parc éolien, dans lequel l'unité de communication (12) est conçue en particulier pour mettre en oeuvre les étapes du procédé selon l'une quelconque des revendications 1 à 8, dans lequel l'unité de communication (12) est conçue
- pour établir une liaison de données (20) entre l'unité de communication (12) et un serveur (22) prédéfini par l'intermédiaire du réseau de données externe (16),
- pour recevoir une demande de planification d'accès (24) du serveur (22) prédéfini par l'intermédiaire du réseau de données externe (16), dans lequel la demande de planification d'accès (24) identifie un abonné (18) du réseau externe (16) et comprend une fenêtre temporelle (51),
- pour établir une liaison de données (30) entre l'unité de communication (12) et l'abonné (18) identifié et
- pour rejeter ou pour refuser des demandes reçues par le réseau de données externe pour un établissement d'une liaison de données ou pour être invisible pour des abonnés (18) du réseau de données externe (16) pour des demandes pour un établissement d'une liaison de données,
dans lequel le système est conçu pour établir la liaison de données (16) entre l'unité de communication (12) et le serveur (22) prédéfini, par l'intermédiaire du réseau de données externe (16), à des moments prédéfinis, par intervalles prédéfinis ou par invitation, de préférence pour recevoir de nouvelles demandes de planification d'accès (24) et de manière particulièrement préférée pour interrompre à nouveau la liaison de données,
dans lequel l'unité de communication (12) est conçue pour mettre en oeuvre l'établissement de la liaison de données (20) au début de la fenêtre temporelle (51) et pour interrompre la liaison de données (20) après expiration d'une durée ou à la fin de la fenêtre temporelle (51).

10. Système selon la revendication 9, dans lequel le système est conçu pour maintenir en permanence la liaison de données (20) entre l'unité de communication (12) et le serveur (22) prédéfini, par l'intermédiaire du réseau de données externe (16), et pour la rétablir automatiquement dans le cas d'une interruption.

11. Système selon la revendication 9 ou 10, dans lequel le système comprend en outre un composant (54) du parc éolien (112) et l'unité de communication (12) est reliée au composant (54) du parc éolien (112) par l'intermédiaire d'un réseau de données interne (10),
dans lequel l'unité de communication (12) est conçue pour transmettre des données entre un abonné (18) et le composant (54), en particulier réalisé en tant que passerelle.

12. Système selon l'une quelconque des revendications 9 à 11, dans lequel le système comprend en outre le serveur (22) et de préférence un ordinateur (26) pour recevoir la demande de planification d'accès (24).

13. Système selon l'une quelconque des revendications 9 à 12, dans lequel le système comprend un serveur pour mettre en oeuvre le procédé selon l'une quelconque des revendications 1 à 8.

14. Parc éolien avec un système selon l'une quelconque des revendications 9 à 12, en particulier comprenant une unité de communication (12).
